# EUROPEAN PATENT APPLICATION

(11) **EP 4 738 228 A1**
(43) Date of publication of application: **06.05.2026**
(21) Application number: 25207975.1
(22) Date of filing: 10.10.2025
(51) Int. Cl.: G06Q 30/0601, G06Q 50/12, G06Q 30/0226

(54) **OMNICHANNEL SELLING ENGINE AND ORDERING ARCHITECTURE**

(30) Priority: 31.10.2024 US 202418933182
(71) Applicant: NCR Voyix Corporation, Atlanta, GA 30308 (US)
(72) Inventor: TRENCSENYI, Zsolt, Praha-Zlicin (CZ); KLOZ, Vladimir, Prague (CZ); BRABEC, Jan, Praha (CZ); ROTH, Roman, Poprad (SK); GRAJCIAR, Ivan, Velka Dobra (CZ)
(74) Representative: Secerna LLP

(57) **Abstract**

An omnichannel ordering architecture is disclosed that enables seamless integration of multiple ordering channels and platforms. The system comprises a cloud-based platform with a central open check object that maintains real-time order state and manages concurrent modifications from various personas. The architecture includes an application programming interface (API) for creating, modifying, and manipulating checks, as well as integrating with existing point-of-sale (POS) systems. The platform supports flexible ownership transfer between cloud and store systems, allowing for efficient order management across different channels. The system can operate during network connectivity loss through alternative communication methods. This architecture improves order accuracy, enhances customer experience, and streamlines operations for food service businesses by providing a unified, real-time order management solution across diverse ordering channels and platforms.

## Description

### Background

In recent years, the food service industry has faced increasing challenges in managing orders across multiple channels and platforms. Traditional point-of-sale (POS) systems often struggle to handle the complexity of modern ordering processes, which can involve various touchpoints such as in-store kiosks, mobile apps, third-party delivery services, and online platforms. This fragmentation can lead to inefficiencies, errors in order processing, and difficulties in maintaining consistent customer experiences across different ordering channels. Additionally, the inability to seamlessly integrate these diverse ordering sources with existing restaurant management systems can result in operational bottlenecks, reduced order accuracy, and diminished customer satisfaction. Furthermore, the reliance on constant network connectivity for order management poses significant risks, as temporary outages can disrupt operations and lead to lost sales or dissatisfied customers.

According to a first aspect of the present invention there is provided a method comprising: receiving, by a cloud-based system, an order from a device; processing the order using an omnichannel cloud selling engine; synchronizing the order across multiple ordering channels; optionally, calculating an order total for the order; optionally, applying at least one loyalty reward; optionally, generating a digital receipt for the order, the digital receipt comprises the order total; and sending at least one notification related to an order status.

Aptly processing further comprises: validating items on the order against a menu; resolving item prices; and applying fees and surcharges based on a configuration.

Aptly synchronizing further comprises: maintaining a digital twin of the order using an open check service; and handling ownership changes of the order between cloud and in-store systems.

Aptly calculating further comprises: using a stateless check calculator service to recalculate a check total and taxes; and ensuring consistency between cloud and in-store calculations.

Aptly applying further comprises: integrating a loyalty program into an ordering process; handling loyalty points redemption; and pushing a new transaction to loyalty providers for point accrual.

Aptly generating further comprises: determining when and how to send digital receipts based on configurable state changes, order modes, and a source of the order.

Aptly sending further comprises: configuring rules for when short message service (SMS) and email notifications should be sent based on state changes, order modes, and a source of the order.

Aptly the method further comprises managing kitchen operations using a kitchen manager; and interfacing with a digital kitchen service to handle order routing and food preparation workflows.

Aptly the method further comprises managing a shopping cart for the order using a cart manager; integrating the shopping cart with an open check service to maintain consistency across different ordering channels.

Aptly the method further comprises processing a payment for the order using a payment orchestrator; and integrating a payment gateway and handling payment-related operations.

Aptly the method further comprises transforming transaction data to a transaction data management (TDM) format using a transaction data orchestrator; performing continuous updates of TDM data as needed.

According to a second aspect of the invention there is provided a method comprising: receiving an order from one of multiple ordering channels; creating an open check object for the order; processing the order using a cloud-based selling engine; synchronizing an order state across cloud and in-store systems; managing order fulfillment; and updating an order status across each channel.

Aptly receiving further comprises: accepting the order from a mobile application, an in-store kiosk, a table-top device, a drive-thru order display, or an order aggregator system.

Aptly creating further comprises: generating a digital twin of the order; and providing an application programming interface (API) for creating, modifying, and manipulating the order.

Aptly processing further comprises: validating order items; calculating taxes and an order total; and applying one or more of promotions and loyalty rewards.

Aptly synchronizing further comprises: implementing a communication channel between cloud-based services and in-store POS systems; handling ownership changes of the order between cloud and in-store systems.

Aptly managing further comprises: routing the order to an appropriate kitchen or fulfillment location; and tracking order preparation status.

Aptly the method further comprises: generating and sending digital receipts based on configurable order states and particular ordering channels.

According to a third aspect of the invention there is provided a system comprising: a cloud-based server including at least one processor and a non-transitory computer-readable medium storing instructions that, when executed by the at least one processor, cause the system to: receive orders from multiple ordering channels; process orders using an omnichannel cloud selling engine; synchronize order data across cloud and in-store systems; manage order fulfillment; generate digital receipts; and send order status notifications; wherein the omnichannel cloud selling engine includes: an open check service for maintaining order state; a check calculator for calculating taxes and totals; a loyalty orchestrator for managing loyalty rewards; a menu validator for validating order items; and a notification orchestrator for managing customer communications.

Aptly the system further comprises: a point-of-sale (POS) system for processing in-store transactions; an order aggregator system for consolidating orders from different channels; and a delivery aggregator system for managing delivery of the orders.

### Brief Description of the Drawings

FIG. 1 is a diagram of an omnichannel ordering system, according to an example embodiment.
FIG. 2 is a flow diagram illustrating high-level interactions between components of the omnichannel ordering system, according to an example embodiment.
FIG. 3 is a diagram illustrating low-level interactions between components of the omnichannel ordering system, according to an example embodiment.
FIG. 4 is a flow diagram of a method for providing and operating omnichannel ordering platform or system, according to an example embodiment.
FIG. 5 is a flow diagram of another method for omnichannel ordering platform or system, according to an example embodiment.

### Detailed Description

To address the challenges faced by the food service industry in managing orders across multiple channels and platforms, an omnichannel ordering architecture is disclosed that offers a comprehensive technical solution. According to embodiments of the technology disclosed herein, an omnichannel cloud selling engine is provided that seamlessly integrates various ordering channels and streamlines order management processes. This omnichannel cloud selling engine serves as a central hub, connecting multiple touchpoints such as in-store kiosks, mobile applications (apps), third-party delivery services, and online platforms, thereby eliminating the fragmentation issues prevalent in traditional point-of-sale (POS) systems. By providing a unified, real-time order management solution, the omnichannel cloud selling engine not only enhances operational efficiency but also significantly improves order accuracy and customer satisfaction across diverse ordering channels, thereby providing a technological improvement over existing systems.

According to example embodiments, the omnichannel cloud selling engine is a stateful system that ensures all operations with a ticket (also referred to as a check or order) are valid according to business requirements. It orchestrates communication between services to produce the desired business outcome. Example features of the engine include: ensuring all items on a ticket are valid (part of a menu, can be sold on a given date and time); allowing simultaneous operations with a check regardless of its current ownership (POS, third-party cloud ordering services, kiosks, etc.); resolving item prices; ensuring proper claiming of loyalty rewards; notifying the loyalty system of purchases for point accrual; recalculating ticket totals on demand; applying fees and surcharges based on configuration; resolving dynamic pricing based on configuration (promotions); calculating taxes; enabling ownership changes of tickets between cloud and store as needed; providing unified messaging to consumers; and generating digital receipts.

Another component of the architecture is an OpenCheck object, which serves as the central element for managing orders. The OpenCheck object maintains the real-time state of the order/check and provides an application programming interface (API) for creating, modifying, and manipulating checks. It is designed to handle concurrent access and modifications from various personas while detecting and preventing conflicts.

The system's flexibility is demonstrated by its ability to change the ownership of a ticket from cloud to store and back as needed. This feature allows for seamless integration between cloud-based ordering platforms and in-store POS systems. Additionally, the architecture supports the concept of "dark kitchens," which are order fulfillment locations that utilize a cloud-based POS system.

As used herein a "persona" refers to an individual, third-party services, and/or endpoint devices. The individuals can be consumers or customers, staff of order fulfillment enterprises or stores, and/or staff of third-party services. The third-party services can include third-party POS system providers, order delivery services, and order system providers. The endpoint devices can include mobile devices operated by the individuals, transaction terminals, and/or order fulfillment terminals.

As used herein the terms "object" and "service" may be used interchangeably and synonymously. This is intended to mean a set of software instructions that performs an operation or a set of operations. The object or service can also be self-contained within a container, which includes its own processing environment to enable hardware agnostic execution of the corresponding object or service.

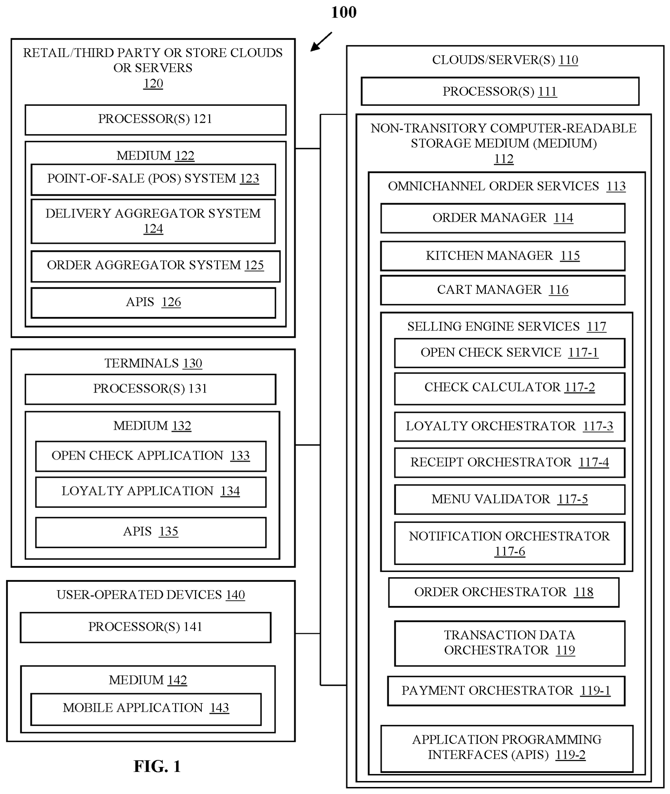

FIG. 1 is a diagram of an omnichannel ordering system 100 (system 100 may also be referred to as "omnichannel ordering platform 100" herein), according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of omnichannel ordering, presented herein and below.

System 100 includes a cloud/server 110 (hereinafter "cloud 110"), one or more retail/third party or store clouds or servers 120, terminals 130, and one or more user-operated devices 150. Cloud 110 includes at least one processor 111 and a non-transitory computer-readable storage medium (hereinafter "medium") 112, which includes instructions for omnichannel order services 113. Omnichannel order services 113 include instructions for an order manager 114, a kitchen manager 115, a cart manager 116, selling engine services 117, an order orchestrator 118, a transaction data orchestrator 119, a payment orchestrator 119-1, and application programming interfaces (APIs) 119-2. Selling engine services 117 further include instructions for an open check service 117-1, a check calculator 117-2, a loyalty orchestrator 117-3, a receipt orchestrator 117-4, a menu validator 117-5, and a notification orchestrator 117-6 . The instructions when executed by processor 111 cause processor 111 to perform processing or operations discussed herein and below with respect to 113 through 119-2.

Each third party or store cloud or server 120 includes at least one processor 121 and a medium 122, which includes instructions for a point-of-sale (POS) system 123, a delivery aggregator system 124, an order aggregator system 125, and APIs 126. The instructions when executed by processor 121 cause processor 121 to perform processing and operations discussed herein and below with respect to 123-126.

Each terminal 130 includes at least one processor 131 and a medium 132, which includes instructions for an open check application 133, a loyalty application 134, and APIs 135. The instructions when executed by processor 131 cause processor 131 to perform processing and operations discussed herein and below with respect to 133-135.

Each user-operated device 140 includes at least one processor 141 and a medium 142, which includes instructions for a mobile application 143. The instructions when provided to and executed by processor 141 cause processor 141 to perform the processing or operations discussed herein and below with respect to 143.

The order manager 114 is responsible for managing and editing orders within the system 100. It provides a user interface for staff to view, modify, and process orders across various channels. The order manager 114 integrates with other components of the system 100 to ensure real-time updates and synchronization of order information.

The kitchen manager 115 is designed to configure and manage kitchen operations. It interfaces with a digital kitchen service to handle order routing and food preparation workflows. The kitchen manager 115 enables staff to monitor and optimize kitchen processes, ensuring efficient order fulfillment.

The cart manager 116 handles shopping cart functionality for both fulfillment orders and omnichannel increments. It manages the creation, modification, and submission of shopping carts, integrating with open check application 133 to maintain consistency across different ordering channels.

The selling engine services 117 provides omnichannel selling through the omnichannel ordering platform 100. These services work together to provide comprehensive order management capabilities including:
a. The open check service 117-1 serves as a digital twin of in-store and above-store checks. It provides a granular API for managing checks, orchestrates continuous validation and enforcement of business rules, and handles the change of ownership between cloud and in-store systems.
b. The check calculator 117-2 is responsible for tax and totals calculation. It provides a stateless service for recalculating check totals, taxes, and applying dynamic pricing logic, ensuring consistency between cloud and in-store calculations.
c. The loyalty orchestrator 117-3 integrates loyalty programs into the ordering process. It handles loyalty points redemption and pushes new transactions to loyalty providers for point accrual.
d. The receipt orchestrator 117-4 manages the generation and delivery of digital receipts. It determines when and how to send digital receipts based on configurable state changes, order modes, and sources of orders.
e. The menu validator 117-5 is responsible for fetching and caching menu data, implementing validation logic, and resolving prices, including time-based restrictions.
f. The notification orchestrator 117-6 manages the sending of notifications to customers. It configures rules for when text (i.e., short message service (SMS)) and email notifications should be sent based on state changes, order modes, and sources of orders.

The order orchestrator 118 is responsible for accepting orders coming through an existing business service layer (BSL) order services to support simplified flows. It facilitates bi-directional communication for certain use cases and status reporting.

The transaction data orchestrator 119 manages the transformation of transactions to transaction data management (TDM) format. It can perform continuous updates of TDM data as needed, ensuring accurate and up-to-date transaction information across the omnichannel ordering platform 100.

The payment orchestrator 119-1 integrates various payment gateways and handles payment-related operations such as processing payments, voids, and refunds. It ensures secure and efficient payment transactions across different ordering channels.

The APIs 119-2 provide interfaces for communication between different components of the omnichannel ordering platform 100 and external services. They enable seamless integration of various ordering channels and third-party services with the selling engine services 117.

The POS system 123 is a component associated with on-line or in-store ordering operations. It integrates with the selling engine services 117 to process transactions, manage inventory, and handle customer interactions. The POS system 123 communicates with the open check service 117-1 to ensure real-time synchronization of order data between the cloud and in-store systems.

The delivery aggregator system 124 is responsible for managing and coordinating delivery orders from various sources. It interfaces with the order orchestrator 118 to process incoming delivery orders and updates their status throughout the fulfillment process. This ensures efficient handling of delivery orders across multiple platforms and delivery services.

The order aggregator system 125 consolidates orders from different channels, including third-party ordering platforms and the restaurant's own ordering systems. It works in conjunction with the order orchestrator 118 to ensure that all orders are properly processed, regardless of their origin. This plays a role in maintaining a unified view of all incoming orders.

The APIs 126 provide a set of interfaces that enable seamless communication between the third party or store cloud systems and the selling engine services 117. These APIs 126 facilitate the exchange of data related to orders, menu items, pricing, and customer information. They ensure that all components of the omnichannel ordering platform 100 can interact efficiently, maintaining consistency across different ordering channels and platforms.

The open check application 133 is an edge component that implements complementary functionality with the open check service 117-1 at the terminal or store level. It provides a similar API 126 for in-store integrations of kiosks and other devices. The open check application 133 handles omnichannel ordering and tracking, enabling seamless integration between cloud-based and in-store systems. It implements communication channels to the POS 123 and handles above-store commands coming through communication and replication channels.

The loyalty application 134 serves as an interface for integrating loyalty programs at the terminal level. It communicates with the loyalty orchestrator 117-3 in the cloud 110 to handle loyalty points redemption and accrual. In an embodiment, the loyalty application 134 provides a unified interface that supports various loyalty providers, ensuring consistent loyalty program functionality across different ordering channels and platforms. In an embodiment, the loyalty application 134 is an enhanced version of an existing loyalty application designed to interact with loyalty orchestrator 117-3 for loyalty integration of orders associated with a particular retailer or store.

The APIs 135 provide a set of interfaces that enable communication between the terminal 130 and other components of the omnichannel ordering platform 100. These APIs 135 facilitate the exchange of data related to orders, menu items, pricing, and customer information. They ensure that the terminal 130 can interact efficiently with both cloud-based services and in-store systems, maintaining consistency across different ordering channels and platforms.

The mobile application 143 serves as a versatile interface for the omnichannel ordering platform 100, catering to both consumers and staff. For consumers, it can function as an aggregator ordering application, an ordering application specific to the omnichannel ordering platform 100, or an ordering application tailored to a particular retailer, restaurant, or store. The consumer-facing version enables users to interact with open checks, place orders, and manage their dining experiences across various channels.

When utilized by staff, the mobile application 143 transforms into a powerful tool for order fulfillment and customer service. For order fulfillment staff, it provides features such as order management, inventory tracking, and status updates. For waitstaff in a restaurant setting, the application enables efficient table management, order taking, and seamless communication with the kitchen.

Regardless of its specific role, the mobile application 143 leverages the selling engine services 117 to process orders and manage interactions. It provides features such as real-time order tracking, integration with loyalty programs, and access to customer information, all tailored to the user's role and permissions.

The mobile application 143 communicates with the cloud 110 through APIs 119-2, enabling it to access and utilize various services such as the open check service 117-1, loyalty orchestrator 117-3, and notification orchestrator 117-6. This integration ensures that actions taken through the mobile application 143, whether by customers or staff, are seamlessly processed and synchronized across all channels, maintaining consistency throughout the entire omnichannel ordering platform 100.

In an embodiment, cart manager 116 is optional. In an embodiment, a customer or user is not required to have any existing loyalty account such that in this situation loyalty orchestrator 117-3 and loyalty application 134 do not have to be processed within system 100.

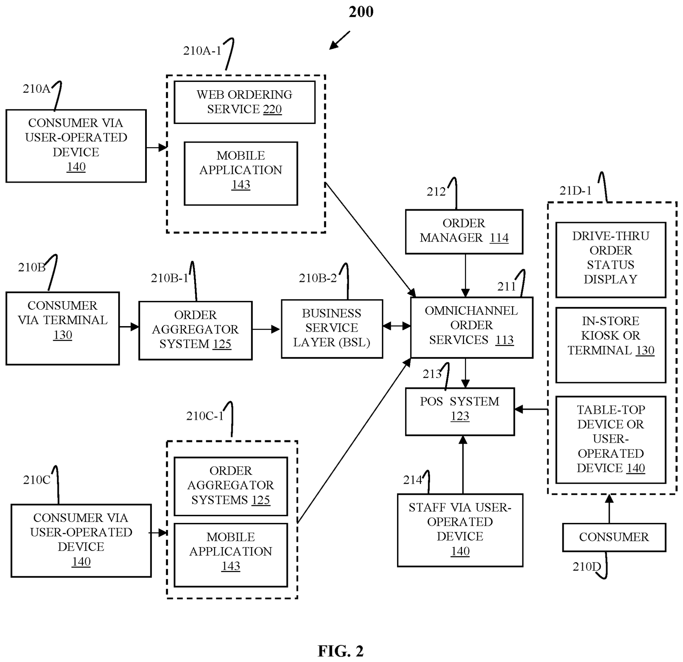

FIG. 2 is a diagram of flow diagram illustrating high-level interactions 200 between components of the omnichannel ordering platform 100, according to an example embodiment. Notably, the components are shown schematically in simplified form, with only those components relevant to understanding of the embodiments being illustrated.

Initially, at 210A, a consumer places an order with a store or restaurant via a user-operated device using mobile application 143 to interact with a web ordering service 220 of the restaurant. The placed order is initially handled web ordering service 220, at 210A-1, through interaction with mobile application 143.

In another case, at 210B, the consumer initiates an order with a food provider via a terminal 130. The terminal 130 can be a kiosk, self-service terminal. The placed order is initially handled by order aggregator system 125 at 210B-1. This can be a situation where a consumer is able to place an order via a terminal 130 with a specific restaurant desired by the consumer via a kiosk that supports the order aggregator system 125.

In another situation, at 210C, the consumer initiates an order via a user-operated device 140 using mobile application 143 and directed to an order aggregator system 125. The consumer uses a mobile application 143 associated with the order aggregator system 125 and the placed order is initially handled by the order aggregator system 125 at 210C-1.

In still another scenario, at 2100, the consumer initiates an order via a table-top device, a user-operated device 140, instore kiosk, or drive thru order status display device. The consumer is present at the restaurant and can be seated at a table within a restaurant, standing in front of a kiosk, or in their vehicle in a drive-thru lane of the restaurant. The terminal can include the kiosk, the table-top device, and/or the drive-thru order status display device. The placed order is initially handled by mobile application 143 of the user-operated device 140 or the open check application 133 of terminal 130 at 210D-1.

When the online POS system 123 handles the placed order, at 211, the omnichannel order services 113 via APIs 126 and 119-2. The omnichannel order services 113 interact with order manager 114, at 212, to ensure that the order is updated, controlled, managed, and status updates reported with POS system 123 and the consumer via user-operated device 140.

When the order aggregator system 125 handles the placed order via an order aggregator enabled terminal 130, the order aggregator system 125 interacts with a BSL, at 210B-2, to ensure restaurant-specific and aggregator-specific rules are complied with for placing the order. The BSL interacts with the omnichannel order services 113, at 211. The omnichannel services 113 interact with order manager 114, at 212, and interact with POS system 123 at 213. The order is placed with POS system 123. At 214, staff of the restaurant have access to the order to make changes and receive order status updated via POS system 123. The omnichannel services 113 interact with order manager 114 and POS system 123 to ensure that the order is updated, controlled, managed, and status updates reported to the consumer and/or the staff.

When the order is handled by the open check application 133 or the mobile application 143 and when the consumer is present at the restaurant, the open check application 133 or the mobile application 143 interacts with POS system 123 at 213. POS system 123 interacts with the omnichannel order services 113 at 211 and the omnichannel order services 113 interact with order manager 114 at 212. omnichannel services 113 interact with order manager 114 and POS system 123 to ensure that the order is updated, controlled, managed, and status updates reported to the consumer and/or the staff.

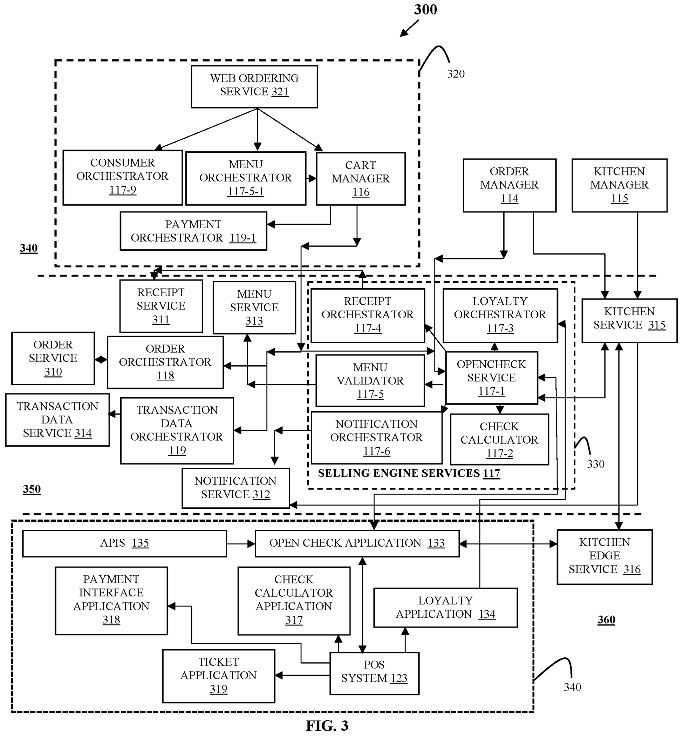

FIG. 3 is a diagram of a diagram illustrating low-level interactions 300 between components of the omnichannel ordering system, according to an example embodiment. Notably, the components are shown schematically in simplified form, with only those components relevant to understanding of the embodiments being illustrated.

The interactions 300 for the omnichannel ordering platform 100 is illustrated in three layers in FIG. 3. The first layer 340 includes online cloud or server based services for coordinating orders originating at any of the three layers. The second layer 350 includes middle layer services that coordinates orders between the three layers. The second layer 350 also includes orders placed via aggregator systems 125 or online via order service 310. The third layer 360 include edge-based or in-store services that coordinate orders between the three layers. The third layer 360 also includes orders placed in store via terminals 130 using open check application 133.

The first layer 340 includes cooperating first layer services 320, which include web ordering service 220, consumer orchestrator 117-9, a menu orchestrator 117-5-1, cart manager 116, and a payment orchestrator 119-1. The first layer 340 also include order manager 114 and kitchen manager 115. In an embodiment, the web ordering service 220 includes a BSL and other services specific to ecommerce ordering. The consumer orchestrator 117-9 manages consumer data; the menu orchestrator 117-5-1 caches menus from restaurants and popular menu items based on analytics; cart manager 116 maintains fulfillment orders and omnichannel additions, modifications, and deletions from any particular order; payment orchestrator 119-1 integrates payment for orders. Order manager 114 manages orders being edited and kitchen manager ensures edited orders are communicated to kitchen fulfillment staff and fulfillment devices.

The second layer 350 includes selling engine services 117, which include open check service 117-1, check calculator 117-2, loyalty orchestrator 117-3, receipt orchestrator 117-4, menu validator 117-5, and notification orchestrator 117-6. The second layer 350 also includes an order service 310, a receipt service 311, a menu service 313, a transaction data service 314, a notification service 312, a kitchen service 315, order orchestrator 118, and transaction data orchestrator 119.

The order service 310 holds order data for orders and serves as an integration point for ordering and delivery partners associated with order aggregator systems 124 and delivery aggregator systems 124, respectively. Receipt service 311 is responsible for providing digital receipts and/or notification of digital receipts to the consumers. The menu service 313 provides menu configuration for integration of menus associated with restaurants. Transaction data service 314 holds and maintains transaction data for orders. Notification service 312 provides order status and fulfillment status via SMS and/or email to consumers and/or staff of restaurants. The kitchen service 315 routes kitchen orders to the appropriate fulfillment kitchen, restaurant, and/or store. Order orchestrator 118 integrates BSL order updates. Transaction data orchestrator 119 configures the transaction data or normalizes the transaction data for order detail integration. Loyalty orchestrator 117-3 integrates consumer loyalty information for orders and pushes transaction for orders to loyalty providers so that the consumers are credited and can claim their loyalty points for the orders. Check calculator 117-2 provides order-specific and locality-specific tax and order totals for orders. Check calculator 117-2 is implemented via stateless POS business logic that provides a means to recalculate a check and allows shared calculation logic above the store in the second layer 350 with the in-store, edge, or third layer 360. Check calculator 117-2 also implements caching optimizations for retrieval and configuration. Receipt orchestrator 117-4 configures creation of and normalization of receipt data for orders. Receipt orchestrator 117-4 sends digital receipts based on configurable order or check state changes, order modes, and source of the order. Menu validator 117-5 fetches and caches menus and fetches and caches availability of menu items for orders associated with any particular menu. Notification orchestrator 117-6 provides real-time order status updated and fulfillment status via email and/or SMS.

Open check service 117-1 provides omnichannel ordering and order tracking for the omnichannel ordering platform 100. Open check service 117-1 provides granular API management of a check or order and orchestrates continuous validation and enforcement of business rules associated with restaurants, stores, aggregator ordering providers, and aggregator delivery providers. It interacts with check calculator 117-2 to ensure recalculations of taxes and order totals based on order changes. It also provides a real-time communication channel to in-store POS systems 123 via the open check applications 133 associated with the third layer 360. Open check service 117-1 also persist the order or check in its own independently maintained database. It maintains order state or status and it integrates with the BSL order to pull orders in and update statuses based on check or order state changes for integrators associated with the omnichannel ordering platform 100. It further handles immediate and future orders being placed via the omnichannel ordering platform 100.

Open check service 117-1 further handles change of order ownership between personas associated with cloud and in-store personas. It detect conflicts in ownership and assigns ownership of orders when conflicts arise. The digital twin of open check service 117-1 is the open check application 133 of the in-store, edge or third layer 360. The open check application 133 is a configured instance of the open check service 117-2. The open check application 133 is specifically configured for a given in-store system and for interaction with the open check service 117-1. In this way, the open check service 117-1 and open check application 133 are considered digital twins since they have only slightly different configurations from one another and share similar processing features.

The third layer 360 includes cooperating third layer services 340, which include a check calculator application 317, a payment interface application 318, a ticket application 319, APIs 135, loyalty application 134, open check application 133, and, optionally, a POS system 123. The third layer 360 also includes a kitchen edge service 316.

APIs 135 are the same as and interact with APIs 119-2, APIs 135 ensure integration of orders with the middle or second layer 350. Payment interface application 318 integrates payments received for orders. Check calculator application 317 provides tax totals and order totals for orders. Check calculator application 317 uses stateless POS logic to recalculate checks on order changes. Ticket application 319 manages tickets for changes to orders. Ticket application 319 provides transaction state for checks or orders on POS system 123 using in-memory representation of the check or order state. Loyalty application 134 integrates loyalty information associated with consumers of the orders. Loyalty application 134 provides a unified interface using a common loyalty API associated with a variety of different loyalty providers.

Open check application 133 provides a communication channel to POS system 123 and implements handling orders placed and/or changes above the in-store, edge, or third layer 360 through a communication or replication channel. Open check application 133 provides security for order integrations, provides order discovery, and provides rate limiting and usage metering. Furthermore, the open check application 133 does not provide any type of configuration to other services.

POS system 123 can be contained within layer three 340 or online based within layer one 340. In an embodiment, a dark kitchen includes order fulfillment for orders but utilizes an online POS system 123 for managing the orders and collecting payment for the orders through the omnichannel ordering platform 100.

The kitchen edge service 316 provides order information to in-store fulfillment devices and fulfillment status information provided through the fulfillment devices back to kitchen service 315 of the second or middle layer 350.

The omnichannel ordering platform 100 enables ordering items over a plurality of communication channels and provides the functionality to modify or change orders in real time. Multiple personas are supported with access to endpoints within the omnichannel platform at a same time. Order change events are published by a current owner of the order and the corresponding changes propagated to the appropriate kitchen or fulfillment location. Orders for a given restaurant can be created outside the typical in-store channel using a variety of devices and order aggregator systems 125. A consumer's mobile application 143 is linked to a rea-time state of the consumer's check or order. Dark kitchens, which lack any POS system, are supported by the omnichannel ordering platform 100 for order fulfillment and/or order delivery.

In an embodiment, the omnichannel ordering platform 100 supports ordering and order fulfillment even when network connections are down. This is achieved via text messages or SMS and/or emails and assumes cellular connections are available for text messaging communications between components of the omnichannel ordering platform 100. For example, the open check service 117-1 is implemented to identify orders and order changes via text message commands and communications with open check application 133 in-store via text message commands to maintain the order state and processing of the order even when network connections are unavailable or temporarily down.

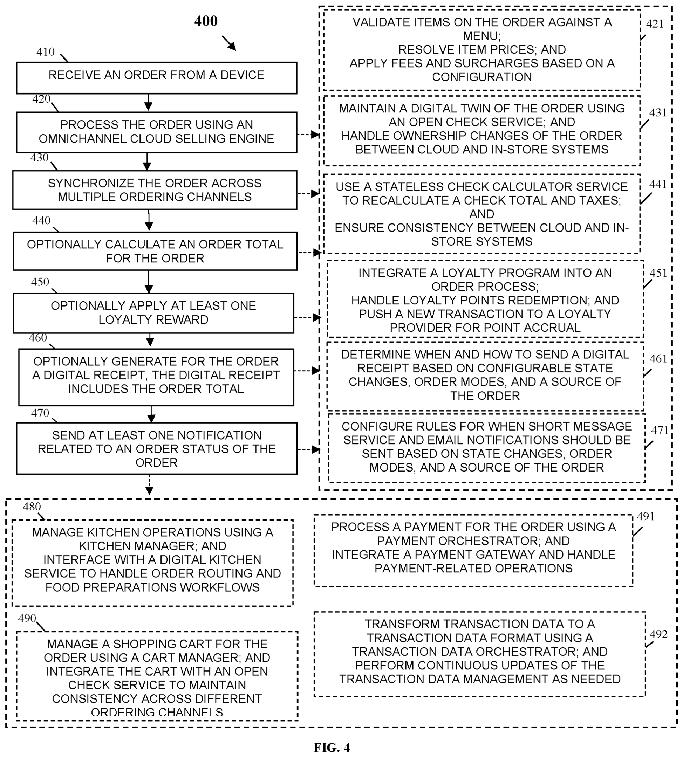

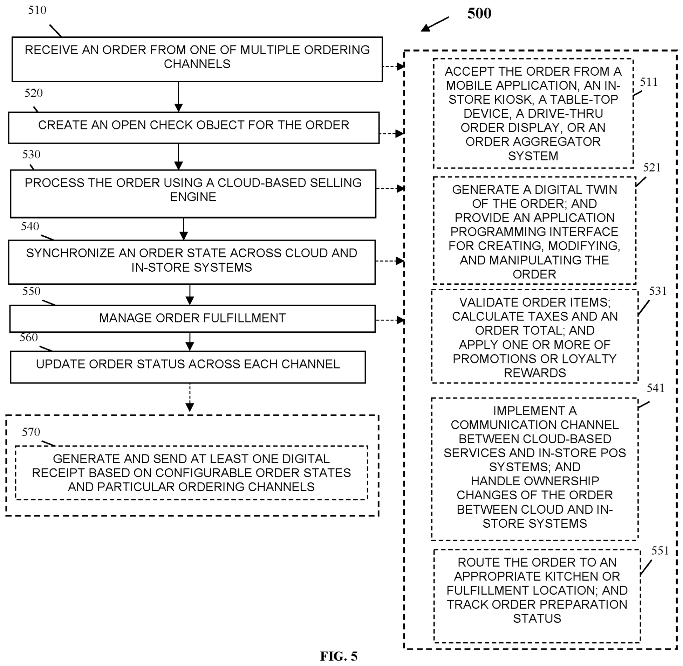

The above-referenced embodiments and other embodiments are now discussed with reference to FIGS. 4 and 5. FIG. 4 is a flow diagram of a method for providing and operating omnichannel ordering platform or system, according to an example embodiment. The software module(s) that implements the method 400 is referred to as an "omnichannel ordering integration service." The omnichannel ordering integration service is implemented as executable instructions programmed and residing within memory and/or a non-transitory computer-readable (processor-readable) storage medium and executed by one or more processors of one or more devices. The processor(s) of the device(s) that executes the omnichannel ordering integration service are specifically configured and programmed to process the omnichannel ordering integration service. The omnichannel ordering integration service may have access to one or more network connections during its processing. The network connections can be wired, wireless, or a combination of wired and wireless.

In an embodiment, the device(s) that executes the omnichannel ordering integration service is cloud 110, retail/third party or store clouds or servers 120, terminals 130, and/or user-operated devices 140. In an embodiment, the omnichannel ordering integration service is any combination of or all of similar store finder 113 through 119-2, 123-126, 133-134, and/or 143.

At 410, the omnichannel ordering integration service receives an order from a device using a cloud-based system. In an embodiment, the device is a user-operated device 140 or a terminal 130. In an embodiment, the terminal 130 is a table-top device, a drive-thru order display, an SST, or a kiosk, a casher-assisted POS terminal.

At 420, the omnichannel ordering integration service processes the order using an omnichannel cloud selling engine. In an embodiment, the omnichannel cloud selling engine at least includes selling engine services 117.

In an embodiment, at 421, the omnichannel ordering integration service validates items on the order against a menu. The omnichannel ordering integration service resolves item prices and applies fees and surcharges based on a configuration specific to the restaurant or store and a location of the restaurant and store.

In an embodiment, at 430, the omnichannel ordering integration service synchronizes the order across multiple ordering channels. The channels include online, cloud, and in-store.

In an embodiment, at 431, the omnichannel ordering integration service maintains a digital twin of the order using an open check service 117-1. The omnichannel ordering integration service handles ownership changes of the order between cloud and in-store systems. In an embodiment, the omnichannel ordering integration service handles ownership changes of the order between different personas. Ownership permits modifications to the order and prevents others from simultaneously making changes. That is, a component with ownership is responsible for publishing the changes to the order, the component with ownership can still receive order changes from other components but that component with ownership is responsible for publishing the order changes for omnichannel synchronization.

Optionally, at 440, the omnichannel ordering integration service calculates an order total for the order. In an embodiment, at 441, the omnichannel ordering integration service uses a stateless check calculator service (e.g., check calculator 117-2) to recalculate a check total and taxes for the order. The omnichannel ordering integration service also ensures consistency between cloud and in-store systems or services.

Optionally, at 450, the omnichannel ordering integration service applies at least one loyalty reward. In an embodiment, the omnichannel ordering integration service integrates a loyalty program into an order process for the order. The omnichannel ordering integration service handles loyalty point redemption and pushes a new transaction to a loyalty provided for point accrual.

Optionally, at 460, the omnichannel ordering integration service generates a digital receipt for the order. The digital receipt includes the order total. In an embodiment, at 461, the omnichannel ordering integration service determines when and how to send a digital receipt for the order based on configurable state changes, order modes, and a source of the order.

At 470, the omnichannel ordering integration service sends at least one notification related to an order status. In an embodiment, at 471, the omnichannel ordering integration service configures rules for when SMS and email notifications should be sent based on state changes, order modes, and a source of the order.

In an embodiment, at 480, the omnichannel ordering integration service manages kitchen operations using a kitchen manager 115. The omnichannel ordering integration service interfaces with a digital kitchen service 315 to handle order routing and food preparation workflows within a fulfillment kitchen.

In an embodiment, at 490, the omnichannel ordering integration service manages a shopping card for the order using a cart manager 116. The omnichannel ordering integration service integrates the cart with an open check service 117-1 to maintain consistency across different ordering channels.

In an embodiment, at 491, the omnichannel ordering integration service processes a payment for the order using a payment orchestrator 119-1. The omnichannel ordering integration service integrates a payment gateway and handles payment-related operations for the order.

In an embodiment, at 492, the omnichannel ordering integration service transforms transaction data to a transaction data format using a transaction data orchestrator 119. The omnichannel ordering integration service performs continuous updates of the transaction data management as needed.

FIG. 5 is a diagram of another method 500 for providing and operating omnichannel ordering platform or system, according to an example embodiment. The software module(s) that implements the method 500 is referred to as an "ordering integration service." The ordering integration service is implemented as executable instructions programmed and residing within memory and/or a non-transitory computer-readable (processor-readable) storage medium and executed by one or more processors of one or more device(s). The processors that execute the ordering integration service are specifically configured and programmed for processing the ordering integration service. The ordering integration service may have access to one or more network connections during its processing. The network connections can be wired, wireless, or a combination of wired and wireless.

In an embodiment, the device(s) that executes ordering integration service is cloud 110, retail/third party or store clouds or servers 120, terminals 130, and/or user-operated devices 140. In an embodiment, the ordering integration service is any combination of or all of 113 through 119-2, 123-126, 133-134, 143 and/or method 400. The ordering integration service presents another and, in some ways, enhanced processing perspective from that which was discussed above for the omnichannel ordering platform 100 of FIGS. 1-3 and/or method 400 of FIG. 4.

At 510, the ordering integration service receives an order from one of multiple ordering channels. In an embodiment, at 511, the ordering integration service accepts the order from a mobile application 143, a terminal 130, or an order aggregator system 125. The terminal includes a table-top device, a drive-thru order display, an in-store kiosk, a stand-alone kiosk, an SST, or a cashier-assisted POS terminal.

At 520, the ordering integration service creates an open check object for the order. In an embodiment, the open check object is the open check service 117-1.

In an embodiment, at 521, the ordering integration service generates a digital twin of the order. The ordering integration service provides an API 119-2 to enable creating, modifying, and manipulating the order. In an embodiment, the digital twin for the order is the in-store or on an edge open check application 133.

At 530, the ordering integration service processes the order using a cloud-based selling engine. In an embodiment, the cloud-based selling engine is the selling engine services 117.

In an embodiment, the ordering integration service validates order items. The ordering integration service also calculates tazes and an order total. The ordering integration service further applies one or more of promotions or loyalty rewards for the order.

At 540, the ordering integration service synchronizes an order state across cloud and in-store systems or services. In an embodiment, at 541, the ordering integration service implements a communication channel between cloud-based services and in-store POS systems. The ordering integration service handles ownership changes of the order between cloud and in-store systems or services.

At 550, the ordering integration service manages order fulfillment for the order. In an embodiment, at 551, the ordering integration service routes the order to an appropriate kitchen or fulfillment location. The ordering integration service also tracks order preparation status. In an embodiment, the kitchen is a dark kitchen.

At 560, the ordering integration service updates order status across each channel. In an embodiment, at 570, the ordering integration service generates and sends at least one digital receipt based on configurable order states and particular ordering channels.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method comprising:
receiving, by a cloud-based system, an order from a device;
processing the order using an omnichannel cloud selling engine;
synchronizing the order across multiple ordering channels;
optionally, calculating an order total for the order;
optionally, applying at least one loyalty reward;
optionally, generating a digital receipt for the order, the digital receipt comprises the order total; and
sending at least one notification related to an order status.

2. The method of claim 1, wherein processing further comprises:
validating items on the order against a menu;
resolving item prices; and
applying fees and surcharges based on a configuration.

3. The method of claim 1 or 2, wherein synchronizing further comprises:
maintaining a digital twin of the order using an open check service; and
handling ownership changes of the order between cloud and in-store systems.

4. The method of any previous claim, wherein calculating further comprises:
using a stateless check calculator service to recalculate a check total and taxes; and
ensuring consistency between cloud and in-store calculations; and/or
wherein applying further comprises:
integrating a loyalty program into an ordering process;
handling loyalty points redemption; and
pushing a new transaction to loyalty providers for point accrual.

5. The method of any previous claim, wherein generating further comprises:
determining when and how to send digital receipts based on configurable state changes, order modes, and a source of the order; and/or wherein sending further comprises:
configuring rules for when short message service (SMS) and email notifications should be sent based on state changes, order modes, and a source of the order.

6. The method of any previous claim, further comprising:
managing kitchen operations using a kitchen manager; and
interfacing with a digital kitchen service to handle order routing and food preparation workflows.

7. The method of any previous claim, further comprising:
managing a shopping cart for the order using a cart manager;
integrating the shopping cart with an open check service to maintain consistency across different ordering channels; and/or further comprising:
processing a payment for the order using a payment orchestrator; and
integrating a payment gateway and handling payment-related operations.

8. The method of any previous claim, further comprising:
transforming transaction data to a transaction data management (TDM) format using a transaction data orchestrator;
performing continuous updates of TDM data as needed.

9. A method comprising:
receiving an order from one of multiple ordering channels;
creating an open check object for the order;
processing the order using a cloud-based selling engine;
synchronizing an order state across cloud and in-store systems;
managing order fulfillment; and
updating an order status across each channel.

10. The method of claim 9, wherein receiving further comprises:
accepting the order from a mobile application, an in-store kiosk, a table-top device, a drive-thru order display, or an order aggregator system.

11. The method of claim 9 or 10, wherein creating further comprises:
generating a digital twin of the order; and
providing an application programming interface (API) for creating, modifying, and manipulating the order; and/or wherein processing further comprises:
validating order items;
calculating taxes and an order total; and
applying one or more of promotions and loyalty rewards.

12. The method of any of claims 9-11, wherein synchronizing further comprises:
implementing a communication channel between cloud-based services and in-store POS systems;
handling ownership changes of the order between cloud and in-store systems; and/or
wherein managing further comprises:
routing the order to an appropriate kitchen or fulfillment location; and
tracking order preparation status.

13. The method of any of claims 9-12, further comprising:
generating and sending digital receipts based on configurable order states and particular ordering channels.

14. A system comprising:
a cloud-based server including at least one processor and a non-transitory computer-readable medium storing instructions that, when executed by the at least one processor, cause the system to:
receive orders from multiple ordering channels;
process orders using an omnichannel cloud selling engine;
synchronize order data across cloud and in-store systems;
manage order fulfillment;
generate digital receipts; and
send order status notifications;
wherein the omnichannel cloud selling engine includes:
an open check service for maintaining order state;
a check calculator for calculating taxes and totals;
a loyalty orchestrator for managing loyalty rewards;
a menu validator for validating order items; and
a notification orchestrator for managing customer communications.

15. The system of claim 14, further comprising:
a point-of-sale (POS) system for processing in-store transactions;
an order aggregator system for consolidating orders from different channels; and
a delivery aggregator system for managing delivery of the orders.
